# EUROPÄISCHE PATENTSCHRIFT

(11) **EP 1 138 462 B1**
(45) Veröffentlichungstag und Bekanntmachung des Hinweises auf die Patenterteilung: **02.11.2005**
(21) Anmeldenummer: 01107989.4
(22) Anmeldetag: 29.03.2001
(51) Int. Cl.: B29C 47/88

(54) **Vorrichtung zum Entwässern von strangförmigem Material**
Apparatus for dewatering strand like material
Dispositif pour la déshydratation d'un matériau en forme de cordon

(30) Priorität: 31.03.2000 DE 10015988
(43) Veröffentlichungstag der Anmeldung: 04.10.2001
(73) Patentinhaber: v. Hagen & Funke GmbH, 45549 Sprockhövel (DE)
(72) Erfinder: Funker, Hans-Walter, 45549 Sprockhövel (DE); Roweda, Christoph, 45549 Sprockhövel (DE)
(74) Vertreter: von Kirschbaum, Alexander

(56) Entgegenhaltungen:
- EP-A- 0 822 380
- DE-A- 3 942 435
- DE-B- 1 690 233
- US-A- 4 159 579
- US-A- 4 741 113

## Beschreibung

Die Erfindung betrifft eine Vorrichtung zum Entwässern von strangförmigem Material, insbesondere von Kabeln.

Eine solche Vorrichtung ist aus dem Dokument US 415 95 79 bekannt. Beim Herstellen von Kabeln werden Drähte mit einer Kunststoffschicht ummantelt. Dies erfolgt beispielsweise durch einen Extruder, wobei das Kabel nach der Beschichtung eine Temperatur von beispielsweise 180 bis 240 °C aufweist. Da Kabel in einem kontinuierlichen Prozeß hergestellt werden, bei dem die Transportgeschwindigkeit des Kabels bis zu 2000 m pro Minute betragen kann, muss das Kabel nach dem Beschichten gekühlt werden. Dies erfolgt indem das Kabel durch ein Wasserbad gezogen oder mit Wasser besprüht wird.

Auch bei der kontinuierlichen Herstellung von Schläuchen durch Extrusion müssen die Schläuche nach dem Extrudieren durch Wasser gekühlt werden. Ebenso erfolgt beim Drahtziehen während und nach dem Ziehvorgang eine Kühlung durch Ziehwasser, d.h. durch ein Gemisch aus Wasser und Öl.

Um strangförmiges Material nach dem Kühlen mit Wasser oder anderen Kühlflüssigkeiten weiterverarbeiten zu können, muss das strangförmige Material entwässert werden. Unter Entwässerung wird das Entfernen der Kühlflüssigkeit verstanden, unabhängig davon, ob es sich um Wasser oder eine andere Kühlflüssigkeit handelt. Bei der Weiterverarbeitung handelt es sich beispielsweise um das Bedrucken der Kabel. Ein Bedrucken bzw. Beschriften der Kabel ist nur möglich, wenn das Kabel ausreichend trocken ist.

Zum Trocknen von strangförmigem Material ist es bekannt, das strangförmige Material durch einen Entwässerungstrog hindurch zu ziehen. Der Entwässerungstrog weist in Längsrichtung mehrere Öffnungen auf, die mit einer Saugvorrichtung verbunden sind. Mit Hilfe der Saugvorrichtung wird das Wasser von dem strangförmigen Material abgesaugt.

Insbesondere bei hohen Transportgeschwindigkeiten kann mit bekannten Vorrichtungen zum Entwässern des strangförmigen Materials kein ausreichender Grad an Trockenheit erzielt werden, um das Material nach dem Entwässern beispielsweise zu bedrucken. Dies hat zur Folge, dass die Transportgeschwindigkeit des strangförmigen Materials in einer Anlage durch die Entwässerungsvorrichtung begrenzt ist.

Aufgabe der Erfindung ist es, eine Vorrichtung zum Entwässern von Kabeln zu schaffen, mit der ein höherer Grad an Trockenheit bzw. eine höhere Transportgeschwindigkeit des Kabels erreicht werden kann.

Die Lösung der Aufgabe erfolgt erfindungsgemäß durch die Merkmale des Anspruchs 1.

Erfindungsgemäß weist die Vorrichtung zum Entwässern von Kabeln eine Schwingvorrichtung auf, durch die der Entwässerungstrog in mechanische Schwingungen versetzt wird. Die Schwingungen werden auf das strangförmige Material übertragen, so dass sich das Wasser besser von dem Material löst. Durch die Schwingvorrichtung findet eine Art Abschütteln des Wassers von dem strangförmigen Material statt.

Wird beispielsweise an einer bestehenden Entwässerungsvorrichtung eine Schwingvorrichtung vorgesehen und die Anlage mit gleichbleibender Transportgeschwindigkeit des strangförmigen Materials betrieben, so kann bei der Entwässerungsvorrichtung mit Schwingvorrichtung ein höherer Grad an Trockenheit des Materials erreicht werden. Dies hat zur Folge, dass Weiterverarbeitungsschritte, wie beispielsweise das Beschriften von Kabeln unmittelbar nach dem Entwässerungsvorgang stattfinden können. Ebenso kann bei gleichbleibendem Trocknungsgrad die Transportgeschwindigkeit des strangförmigen Materials erhöht werden. Ein Erhöhen der Transportgeschwindigkeit führt zu Produktivitätssteigerung und damit zur Kostenverringerung.

Vorzugsweise ist die Schwingvorrichtung derart ausgebildet, dass die auftretenden Schwingungen im wesentlichen nur in der horizontalen Trogebene auftreten. Durch das Unterdrücken von Schwingungen in vertikaler Richtung ist der Entwässerungsvorgang verbessert. Ferner ist durch das Unterdrücken vertikaler Schwingungen verhindert, dass das strangförmige Material aus dem zumeist an der Oberseite offenen Trog herausspringt.

Das Vorsehen von Abdeckungen oder Halterungen ist daher nicht erforderlich.

Vorzugsweise entspricht die Frequenz der Schwingvorrichtung mindestens dem Quotienten aus der Transportgeschwindigkeit des strangförmigen Materials zur Troglänge. Dies hat zur Folge, dass das strangförmige Material während des Transports durch den Entwässerungstrog mindestens eine Schwingung erfährt. Zur Verbesserung der Entwässerung beträgt die Frequenz vorzugsweise mindestens das Zweifache insbesondere das Vierfache dieses Quotienten.

Die Frequenz der Schwingvorrichtung liegt vorzugsweise in dem Bereich von 10 bis 100 Hz. Besonders bevorzugt ist ein Bereich von 30 bis 70 Hz. Bei einer Frequenz von beispielsweise 50 Hz und einer Troglänge von 1 m kann die Transportgeschwindigkeit des strangförmigen Materials bis zu 3000 m pro Minute betragen, wobei bei 3000 m pro Minute auf das strangförmige Material während des Hindurchziehens durch den Entwässerungstrog genau eine Schwingung wirkt. Bei einer Transportgeschwindigkeit von 500 m pro Minute, einer Frequenz von 50 Hz und einer Troglänge von 1 m wirken bereits 6 Schwingungen auf das strangförmige Material.

Als Schwingvorrichtung kann beispielsweise ein Magnetrüttler vorgesehen werden. Vorzugsweise wird ein Unwuchtmotor vorgesehen, da es sich hierbei um ein kostengünstiges Bauteil handelt. Der Unwuchtmotor weist ein exzentrisch gelagertes Gewicht auf. Zur Erzeugung von Schwingungen in einer horizontalen Trogebene ist die Achse des Unwuchtmotors vertikal angeordnet, so dass sich die exzentrisch gelagerte Masse in einer horizontalen Ebene bewegt.

Die Lagerung des Entwässerungstrogs erfolgt vorzugsweise schwimmend, beispielsweise durch zwischen einer Halterung und dem Entwässerungstrog vorgesehene Gummilager. Durch das Vorsehen von Gummilagern ist ein Schwingen des Entwässerungstrogs möglich. Die Gummilager können so ausgebildet sein, dass sie im wesentlichen nur Schwingungen in der horizontalen Trogebene zulassen. Hierbei handelt es sich beispielsweise um zylindrische Gummipuffer, die senkrecht zur Zylinderlängsachse, d.h. in horizontaler Trogebene eine hohe und in Längsrichtung der Zylinder eine geringe Elastizität aufweisen.

Bei einer besonders bevorzugten Ausführungsform ist zur Verbesserung der Entwässerung des strangförmigen Materials eine auf den Entwässerungstrog gerichtete Blasvorrichtung vorgesehen. Durch das zusätzliche Anblasen des strangförmigen Materials wird das Wasser bzw. jede andere Kühlflüssigkeit leichter von dem strangförmigen Material getrennt und kann daher leichter durch die Saugvorrichtung abgesaugt werden. Das Anblasen des strangförmigen Materials erfolgt vorzugsweise entgegen der Transportrichtung.

Vorzugsweise weist die Saugvorrichtung und die Blasvorrichtung ein gemeinsames Gebläse auf. Dies hat den Vorteil, dass nur ein einziges Gebläse erforderlich ist, durch das gleichzeitig gesaugt und geblasen wird. Dies hat erhebliche Kosteneinsparungen zur Folge, da das zweite Gebläse entfällt.

Um zu vermeiden, dass Wasser in das Gebläse gelangt, weist die Saugvorrichtung vorzugsweise einen dem Gebläse vorgeschalteten Wasserabscheider auf.

Nachfolgend wird die Erfindung anhand einer bevorzugten Ausführungsform unter Bezugnahme auf die anliegenden Zeichnungen näher erläutert.

Es zeigen:
- Fig. 1: eine schematische Seitenansicht einer Entwässerungsvorrichtung,
- Fig. 2: eine schematische perspektivische Ansicht des Entwässerungstrogs mit Schwingvorrichtung, und
- Fig. 3: eine schematische Explosionszeichnung des Entwässerungstrogs mit Schwingvorrichtung.

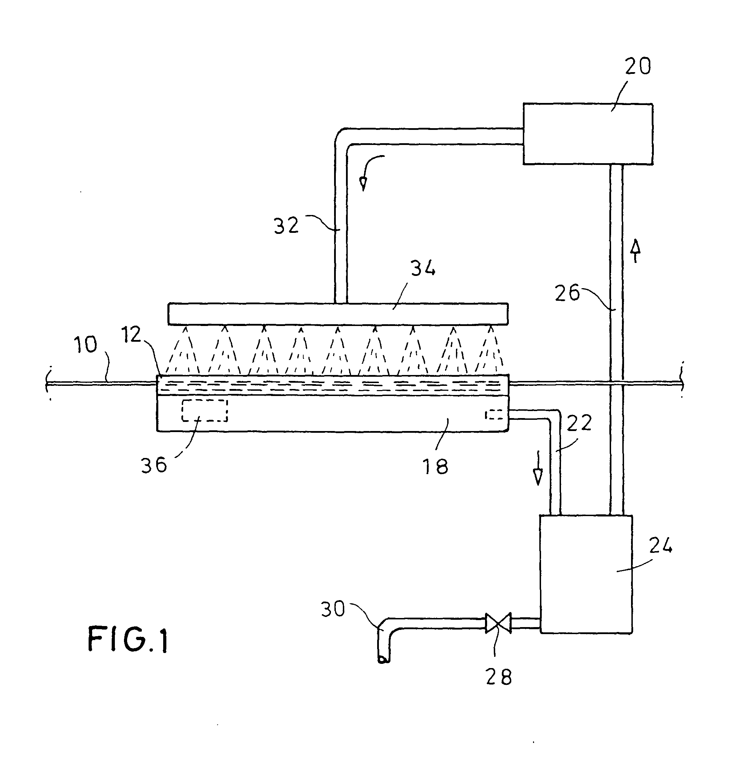

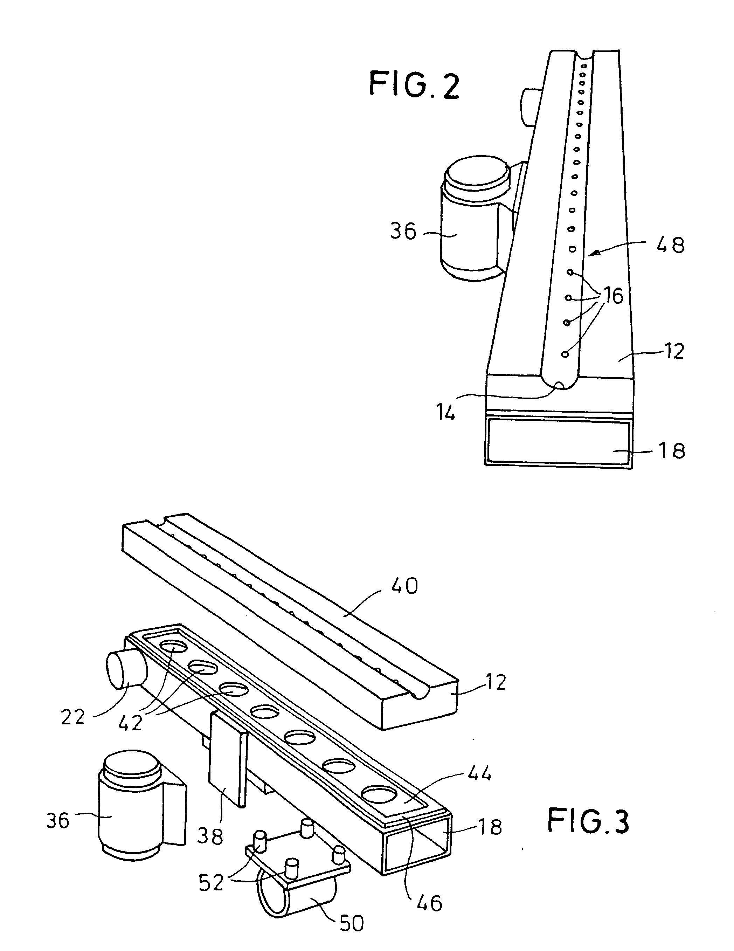

Die dargestellte Ausführungsform zum Entwässern von strangförmigen Material 10 weist einen Entwässerungstrog 12 auf, durch den das strangförmige Material 10 in Längsrichtung hindurchgezogen wird. Im dargestellten Ausführungsbeispiel ist der Entwässerungstrog 12 rinnenförmig. Es kann sich auch um ein geschlossenes Rohr mit kreisringförmigem oder beliebigem anderen Querschnitt handeln. Der Entwässerungstrog 12 weist im Trogboden 14 Öffnungen 16 auf (Fig. 2), die mit einem Saugkanal 18 verbunden sind. In dem Saugkanal 18 wird mittels eines Gebläses 20 (Fig. 1) Unterdruck erzeugt. Hierzu ist der Saugkanal 18 über ein Rohr 22, einem Wasserabscheider 24 und ein zwischen dem Wasserabscheider 24 und dem Gebläse 20 vorgesehenen Rohr 26 mit dem Gebläse 20 verbunden.

Durch den dem Gebläse 20 vorgeschalteten Wasserabscheider 24 ist verhindert, dass von dem Strangmaterial 10 abgesaugtes Wasser in das Gebläse 20 gelangt und dieses beschädigt. Der Wasserabscheider 24 weist ein mit einem Ventil 28 versehenes Ablaßrohr 30 zum Ablassen des sich in dem Wasserabscheider 24 sammelnden Wassers auf. Zum automatischen Ablassen kann in dem Ablaßrohr eine Pumpe vorgesehen sein, die durch einen in dem Wasserabscheider angeordneten Niveauregler gesteuert wird.

Das Gebläse 20 ist über ein Rohr 32 mit einem Luftaustrittsbalken 34 verbunden. Bei dem Luftaustrittsbalken 34 handelt es sich um ein in Längsrichtung des strangförmigen Materials 10 ausgerichteten Hohlkörper mit Luftaustrittsöffnungen. Die Luftaustrittsöffnungen sind auf das strangförmige Material 10 gerichtet. Aus dem Luftaustrittsbalken tritt somit ein auf das strangförmige Material gerichteter Luftstrom aus, durch den das Entfernen des Wassers von dem strangförmigen Material 10 unterstützt wird.

Zum Abblasen des Wassers kann anstelle oder zusätzlich zu dem Luftaustrittsbalken 34 eine Ringdüse vorgesehen sein. Die Ringdüse ist am Ende des Entwässerungstrog 12, d.h. an dem Ende, an dem das Kabel 10 den Entwässerungstrog 12 verläßt, angeordnet.

Die Saugvorrichtung der Entwässerungsvorrichtung, die sich im wesentlichen aus dem Saugkanal 18 und dem Gebläse 20 zusammensetzt sowie die Blasvorrichtung, die sich im wesentlichen aus dem Luftaustrittsbalken 34 und dem Gebläse 20 zusammensetzt, weisen dasselbe Gebläse 20 auf. Durch das Gebläse 20 wird somit einerseits Luft aus dem Saugkanal 18 abgesaugt und andererseits Luft in den Luftaustrittsbalken 34 gefördert, um einen auf das strangförmige Material 10 gerichteten Luftstrom zu erzeugen.

Zur Erzeugung von Schwingungen ist der Entwässerungstrog 12 mit einer Schwingvorrichtung mit einem Unwuchtmotor 36 verbunden.

Der Unwuchtmotor 36 ist über eine Halterung 38 fest mit dem Saugkanal 18 und über diesen mit dem Entwässerungstrog 12 verbunden (Fig. 3). Durch die feste Verbindung des Unwuchtmotors 36 mit dem Entwässerungstrog 12 wird die durch den Unwuchtmotor 36 erzeugte Schwingung unmittelbar auf den Entwässerungstrog 12 übertragen. Die Drehachse des Unwuchtmotors verläuft vertikal, so dass eine exzentrisch in dem Unwuchtmotor vorgesehene Masse in einer horizontalen Ebene bewegt wird. Hierdurch wird eine Schwingung in einer horizontalen Trogebene erzeugt. Die Trogebene ist eine parallel zur Oberseite 40 des Trogs 12 verlaufende Ebene. Bei horizontal angeordnetem Entwässerungstrog 12 handelt es sich um eine horizontale Ebene. Unter horizontaler Trogebene wird jedoch auch eine Trogebene eines geneigten Entwässerungstroges 12 verstanden. Diese Ebene ist gegenüber einer Horizontalen geneigt. Die Drehachse des Unwuchtmotors 36 verläuft senkrecht zur Trogebene.

Der Saugkanal, der über das Rohr 22 mit dem Wasserabscheider 24 verbunden ist, weist an seiner Oberseite Öffnungen 42 (Fig. 3) auf. Die Öffnungen 42 weisen einen erheblich größeren Durchmesser als die in dem Trogboden 14 vorgesehenen Öffnungen 16 auf. Der Trog 12 ist mit einer Oberseite 44 des Saugkanals 18 verbunden, so dass die Öffnungen 42 des Saugkanals 18 und die Öffnungen 16 des Entwässerungstrogs 12 einander gegenüberliegen. Zwischen dem Entwässerungstrog 12 und dem Saugkanal 18 ist eine Dichtung 46 vorgesehen.

Der Entwässerungstrog 12 weist eine im Querschnitt halbkreisförmige Entwässerungsrinne 48 auf. Um mit der Entwässerungsvorrichtung unterschiedliche Strangmaterialien 10 entwässern zu können, ist der Entwässerungstrog 12 austauschbar, so dass unterschiedliche Entwässerungströge 12 mit unterschiedlichen Entwässerungsrinnen 48 vorgesehen werden können. Die Entwässerungsrinnen 48 können in Abhängigkeit des zu entwässernden Materials unterschiedliche Querschnitte sowie unterschiedliche Querschnittsabmessungen aufweisen.

Der Entwässerungstrog 12 ist mittels einer Halterung 50 gehalten. Um die durch den Unwuchtmotor 36 hervorgerufenen Schwingungen zu ermöglichen, ist der Saugkanal 18 und damit auch der Entwässerungstrog 12 schwimmend gelagert. Hierzu sind zwischen der Halterung 50 und dem Saugkanal 18 zylindrische Gummipuffer 52 vorgesehen. Bei den Gummipuffern 52 handelt es sich um Gummipuffer mit elastischer Vorzugsrichtung. Dies bedeutet, dass die Gummipuffer senkrecht zur Längsrichtung, d.h. parallel zur Trogebene eine hohe Elastizität und in Längsrichtung eine geringe Elastizität aufweisen. Dadurch ist verhindert, dass allzu große Schwingungen in vertikaler Richtung, d.h. senkrecht zur Trogebene auftreten.

## Patentansprüche

1. Vorrichtung zum Entwässern von Kabeln, die nach dem Ummanteln der Drähte mit einer Kunststoffschicht mit einer Kühlflüssigkeit gekühlt werden, mit
einem Entwässerungstrog (12) zum Hindurchziehen des strangförmigen Materials (10),
einer Saugvorrichtung (18,20) zum Absaugen des Wassers aus dem Entwässerungstrog (12)
**dadurch gekennzeichnet, dass** die Vorrichtung eine
den Entwässerungstrog (12) in Schwingungen versetzenden Schwingvorrichtung (36) umfasst.

2. Vorrichtung nach Anspruch 1, **dadurch gekennzeichnet, dass** die Schwingvorrichtung (36) den Entwässerungstrog (12) in im wesentlichen in der horizontalen Trogebene auftretende Schwingungen versetzt.

3. Vorrichtung nach Anspruch 1 oder 2, **dadurch gekennzeichnet, dass** die Frequenz der Schwingvorrichtung mindestens dem Quotienten aus Transportgeschwindigkeit des strangförmigen Materials (10) zur Troglänge, vorzugsweise mindestens dem Zweifachen, insbesondere mindestens dem Vierfachen des Quotienten entspricht.

4. Vorrichtung nach einem der Ansprüche 1-3, **dadurch gekennzeichnet, dass** als Schwingvorrichtung (36) ein Unwuchtmotor vorgesehen ist.

5. Vorrichtung nach einem der Ansprüche 1-4, **dadurch gekennzeichnet, dass** der Entwässerungstrog (12) schwimmend gelagert ist.

6. Vorrichtung nach einem der Ansprüche 1-5, **dadurch gekennzeichnet, dass** der Trogboden (14) mit der Saugvorrichtung (18,20) verbundene Öffnungen (16) aufweist.

7. Vorrichtung nach einem der Ansprüche 1-6, **dadurch gekennzeichnet, dass** eine auf den Entwässerungstrog (12) gerichtete Blasvorrichtung (20,34) vorgesehen ist.

8. Vorrichtung nach Anspruch 7, **dadurch gekennzeichnet, dass** die Saugvorrichtung (18,20) und die Blasvorrichtung (20,34) ein gemeinsames Gebläse (20) aufweisen.

9. Vorrichtung nach einem der Ansprüche 1-8, **dadurch gekennzeichnet, dass** die Saugvorrichtung (18,20) einen dem Gebläse (20) vorgeschalteten Wasserabscheider (24) aufweist.

## Claims

1. A device for dewatering cables which are cooled by a cooling liquid after the wires have been sheathed with a plastics layer, comprising
a dewatering trough (12) for pulling the strand-like material (10) therethrough,
a suction device (18, 20) for drawing off the water from the dewatering trough (12),
**characterized in that** the device comprises a vibratory device (36) causing the dewatering trough (12) to vibrate.

2. The device of claim 1, wherein the vibratory device (36) causes vibrations in the dewatering trough (12) that occur substantially in the horizontal plane of the trough.

3. The device of claim 1 or 2, wherein the frequency of the vibratory device corresponds to at least the quotient of the feed velocity of the strand-like material (10) and the trough length, preferably to at least twice the quotient, and in particular to at least four times the quotient.

4. The device of one of claims 1-3, wherein an off-balance rotary motor is provided as the vibratory device (36).

5. The device of one of claims 1-4, wherein the dewatering trough (12) is floatingly supported.

6. The device of one of claims 1-5, wherein the trough bottom (14) has openings (16) in communication with the suction device (18, 20).

7. The device of one of claims 1-6, wherein a blower device (20, 34) is provided that is directed towards the dewatering trough (12).

8. The device of claim 7, wherein the suction device (28, 20) and the blower device (20, 34) have a common fan (20).

9. The device of one of claims 1-8, wherein the suction device (18, 20) has a water separator (24) upstream of the fan (20).

## Revendications

1. Dispositif pour la déshydratation de câbles qui, après l'enrobage des fils à l'aide d'une couche de matière plastique, sont refroidis avec un liquide de refroidissement, comprenant
un bac de déshydratation (12) pour faire passer le matériau (10) en forme de cordon,
un dispositif d'aspiration (18, 20) pour aspirer l'eau du bac de déshydratation (12),
**caractérisé en ce que** le dispositif comprend un dispositif d'oscillation (36) qui fait osciller le bac de déshydratation (12) en oscillation.

2. Dispositif selon la revendication 1, **caractérisé en ce que** le dispositif d'oscillation (36) fait osciller le bac de déshydratation (12) pour l'essentiel dans le plan de bac horizontal.

3. Dispositif selon la revendication 1 ou 2, **caractérisé en ce que** la fréquence du dispositif d'oscillation correspond au moins au quotient de la vitesse de transport du matériau en forme de cordon (10) par rapport à la longueur du bac, de préférence au moins deux fois, en particulier au moins quatre fois le quotient.

4. Dispositif selon l'une quelconque des revendications 1 à 3, **caractérisé en ce qu'**un moteur déséquilibré est prévu en tant que dispositif d'oscillation (36).

5. Dispositif selon l'une quelconque des revendications 1 à 4, **caractérisé en ce que** le bac de déshydratation (13) est logé de façon flottante.

6. Dispositif selon l'une quelconque des revendications 1 à 5, **caractérisé en ce que** le fond de bac (14) présente des ouvertures (16) reliées au dispositif d'aspiration (18, 20).

7. Dispositif selon l'une quelconque des revendications 1 à 6, **caractérisé en ce qu'**un dispositif de soufflage (20, 34) orienté en direction du bac de déshydratation (12) est prévu.

8. Dispositif selon la revendication 7,
**caractérisé en ce que** le dispositif d'aspiration (18, 20) et le dispositif de soufflage (20, 34) présentent une soufflante commune (20).

9. Dispositif selon l'une quelconque des revendications 1 à 8, **caractérisé en ce que** le dispositif d'aspiration (18, 20) présente un séparateur d'eau (24) monté en amont de la soufflante (20).
